# EUROPEAN PATENT SPECIFICATION

(11) **EP 2 883 783 B1**
(45) Date of publication and mention of the grant of the patent: **14.09.2016**
(21) Application number: 14196381.9
(22) Date of filing: 04.12.2014
(51) Int. Cl.: B62K 11/04, F02M 35/16, F02M 35/10, F15D 1/04

(54) **Intake system of saddle-type vehicle**
Ansaugsystem eines Fahrzeugs mit Sattel
Système d'admission d'un véhicule, de type à selle

(30) Priority: 10.12.2013 JP 2013254736
(43) Date of publication of application: 17.06.2015
(73) Proprietor: HONDA MOTOR CO., LTD., Tokyo, 107-8556 (JP)
(72) Inventor: Nishimura, Shin, Wako-shi, Saitama 351-0193 (JP); Sano, Takahiro, Wako-shi, Saitama 351-0193 (JP); Tsukui, Hiroaki, Wako-shi, Saitama 351-0193 (JP)
(74) Representative: Stevens, Jason Paul

(56) References cited:
- EP-A1- 1 614 889
- DE-A1-102010 045 985
- JP-A- 2002 048 021
- JP-A- 2005 343 356
- US-A- 5 651 339
- US-A1- 2008 283 014
- US-A1- 2009 050 105
- US-B1- 6 251 151

## Description

The present invention relates to a saddle-type vehicle having an air intake system. More specifically, the intake system includes an air cleaner that is disposed above an engine main body mounted on a vehicle body frame and is connected to cylinder heads of the engine main body, and an air introducing unit for introducing air into an air inlet provided on at least one side of the air cleaner in a lateral direction of the vehicle. The air introducing unit has an opened front end and is connected to the air cleaner in such a manner as to change an intake direction from a longitudinal direction of the vehicle to a lateral direction of the vehicle.

A saddle-type vehicle of this type is already known from Japanese Patent Laid-Open No. 2005-343356, on which the preamble of claim 1 is based.

However, if the configuration as disclosed in Japanese Patent Laid-Open No. 2005-343356, in which air whose intake direction has been changed from longitudinal to lateral is introduced into the air inlet of the air cleaner, is employed, the air is introduced into the air cleaner with disturbance of an airflow generated at the part which changes the intake direction, and this can prevent the achievement of a desired intake efficiency of an engine.

The present invention is made in view of such circumstances, and it is an object of at least the preferred embodiment to provide an intake system of a saddle-type vehicle that prevents air from being introduced into an air cleaner with disturbance of the airflow, to allow enhancement in the intake efficiency of an engine.

According to a first aspect of the present invention, there is provided a saddle-type vehicle having an intake system, the intake system comprising: an air cleaner that is disposed above an engine main body mounted on a vehicle body frame and is connected to cylinder heads of the engine main body; and an air introducing unit for introducing air into an air inlet provided at at least one side of the air cleaner in the lateral direction of the vehicle, the air introducing unit having an open front end and being connected to the air cleaner in such a manner as to change an air intake direction from the longitudinal direction of the vehicle to the lateral direction of the vehicle, the intake system being characterized in that a plurality of ribs that partition the air inlet into a plurality of sections are provided in the air inlet, the plurality of ribs being disposed in a honeycomb manner.

According to this arrangement, the air inlet of the air cleaner is partitioned into plural sections by the plural ribs. Therefore, although the air introducing unit for introducing air into the air inlet changes the air intake direction from longitudinal to lateral and disturbance of the airflow is generated at the bending part, air is introduced into the air cleaner only after its airflow is regulated by the plural ribs. This makes it possible to extend part of the air introducing unit in the longitudinal direction to ensure a capacity of the air introducing unit, and can also contribute to enhancement in the intake efficiency of the engine through the airflow regulation for air to be introduced into the air cleaner.

Further, the arrangement of the ribs allows the rigidity of the air inlet and a lateral part of the air cleaner around it to be enhanced, and an opening area of the air inlet can be set larger. Thus, higher intake capacity can be ensured and further enhancement in the intake efficiency of the engine can be achieved.

Preferably, the air introducing unit includes at least an intake duct that extends in the longitudinal direction of the vehicle to guide air from a front side and has, at a rear end part, a bending part that changes the intake direction from the longitudinal direction of the vehicle to the lateral direction of the vehicle, and a connecting tube that has the air inlet in which the plurality of ribs are provided at a downstream end part and serves as part of the air introducing unit downstream of the bending part, and the connecting tube is connected to the air cleaner and is made of an elastic material.

Since the connecting tube forming the downstream part of the air introducing unit has the air inlet in which the ribs are provided at the downstream end part and is formed of an elastic material, the rigidity of the air inlet can be enhanced by the ribs, and the downstream end part of the connecting tube can be assembled to the air cleaner while the air inlet is bent. Thus, rigidity and ease of assembly can both be achieved.

In a further preferred form, the intake duct is disposed on a laterally outer side of at least one of a pair of left and right frame members that serve as part of the vehicle body frame and that are disposed on both sides of the air cleaner, and part of the connecting tube is housed in a through-hole made in the at least one of the frame members.

With this arrangement, the connecting tube can be supported by the frame member, and an opening area of the connecting tube can be ensured.

Preferably, the air inlets are provided at both lateral sides of the air cleaner, and the air introducing units are connected to the air cleaner as a pair of left and right units.

This can ensure a sufficient capacity of the intake into the air cleaner, and can further enhance the intake efficiency of the engine.

Preferably, the air cleaner is disposed above the engine main body formed as a V-type engine in such a manner that part of the air cleaner is housed in a valley formed between a front bank and a rear bank included in the engine main body, and front bank and rear bank throttle bodies connected to the cylinder heads of the front bank and the rear bank are at least partially housed in the air cleaner, and a cleaner element is disposed between the front bank and rear bank throttle bodies.

Thus, air introduced from the air inlet at a side of the air cleaner can be effectively filtered by the cleaner element disposed along an intake flow direction at substantially the centre of the air cleaner between the front and rear throttle bodies.

In a further preferred form, the cleaner element has a rectangular shape with its longer axis parallel to an axis of a crankshaft that is rotatably borne by the engine main body and extends in the lateral direction of the vehicle.

With this arrangement, the cleaner element can be formed into a rectangular shape to increase a filtering area, and can be set along the intake flow direction so that air can be filtered more effectively.

A preferred embodiment of the invention will now be described by way of example only and with reference to the accompanying drawings, in which:
FIG. 1 is a left side view of a motorcycle with a first embodiment of an intake system;
FIG. 2 is a longitudinal cross-sectional view of a part of an engine;
FIG. 3 is a perspective view of an air cleaner as viewed from above front right, in a state in which a case cover is not present;
FIG. 4 is a perspective view of the air cleaner as viewed from above left, in a state in which the case cover and a partition wall are not present;
FIG. 5 is a side view of a front part of a vehicle body frame and the air cleaner;
FIG. 6 is a plan view of the air cleaner and air introducing units;
FIG. 7 is an enlarged cross-sectional view taken along line 7-7 in FIG. 6;
FIG. 8 is a side view of an alternative connecting tube; and
FIG. 9 is a view taken along arrow 9 in FIG. 8.

An embodiment of the present invention will be described below with reference to the accompanying drawings. In the following description, terms such as "front", "rear", "up", "down", "left" and "right" should be interpreted from the viewpoint of a rider riding the motorcycle.

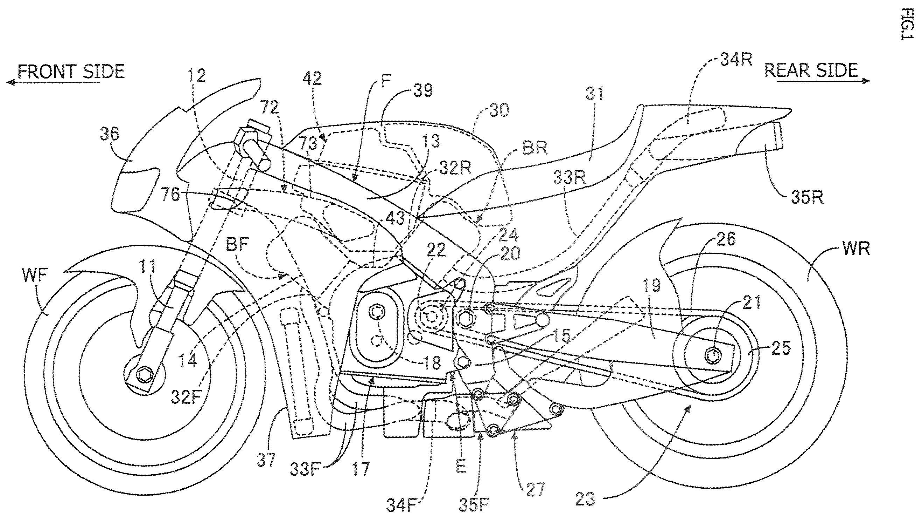

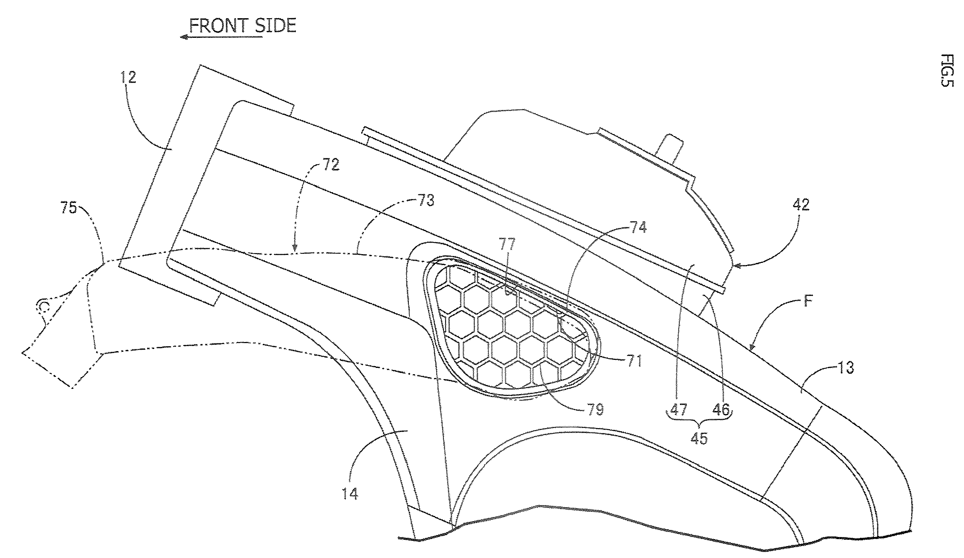

An embodiment of the present invention will now be described with reference to FIGS. 1 to 7. Referring first to FIG. 1, a vehicle body frame F of a motorcycle (as an example of a saddle-type vehicle) includes the following components: a head pipe 12 that steerably bears a front fork 11 that in turn pivotally supports a front wheel WF; a pair of left and right main frames 13 extending rearwardly and downwardly from the head pipe 12; a pair of left and right engine hangers 14 that are welded to the head pipe 12 and the front parts of both main frames 13 and extend downwardly from the main frames 13; and a pair of left and right pivot frames 15 extending downwardly from rear parts of the main frames 13.

On the vehicle body frame F is mounted an engine main body 17 of, for example, a V-type engine E formed with four cylinders. In this embodiment, the engine main body 17 is supported by lower parts of the pair of engine hangers 14, intermediate parts of the main frames 13, and upper parts and lower parts of the pair of pivot frames 15 in such a manner as to rotationally bear a crankshaft 18 which extends in the lateral direction of the vehicle. The engine main body 17 has a front cylinder bank BF and a rear cylinder bank BR disposed in a V-shape in such a manner that pairs of two cylinders are each lined up side-by-side in the axial direction of the crankshaft 18.

At vertically intermediate parts of the pair of pivot frames 15, a front end part of a swing arm 19 is swingably borne by means of a pivot 20. An axle 21 of a rear wheel WR is rotatably borne by a rear end part of this swing arm 19.

Power from an output shaft 22 of a transmission included in the engine main body 17 is transmitted to the rear wheel WR via a chain transmitting unit 23. This chain transmitting unit 23 is composed of a drive sprocket 24 fixed to the output shaft 22, a driven sprocket 25 fixed to the axle 21 of the rear wheel WR, and an endless chain 26 wound around these sprockets 24 and 25.

A front part of the swing arm 19 is connected to lower parts of the pair of pivot frames 15 by means of a link mechanism 27, and a rear cushion unit (not shown) is provided between a part of this link mechanism 27 and the rear parts of the main frames 13.

A fuel tank 30 is supported by the main frames 13 above the rear cylinder bank BR in the engine main body 17, and a riding seat 31 disposed rearward of this fuel tank 30 is supported at a rear part of the vehicle body frame F.

Front-bank exhaust pipes 33F extend from each cylinder of a cylinder head 32F of the front bank BF in the engine main body 17, pass below the engine main body 17, and extend rearwardly to be connected to a front bank collecting exhaust pipe 34F in common. This front bank collecting exhaust pipe 34F is connected to a front bank exhaust muffler 35F disposed rearwardly of and beneath the engine main body 17. Further, rear bank exhaust pipes 33R extend from each cylinder of a cylinder head 32R of the rear bank BR in the engine main body 17, and extend rearwardly to a rear bank collecting exhaust pipe 34R at the rear of the riding seat 31. This rear bank collecting exhaust pipe 34R is connected to a rear bank exhaust muffler 35R disposed above the rear wheel WR.

The head pipe 12 in the vehicle body frame F is covered from the front by a front cowl 36. A front part of the vehicle body frame F and part of the engine main body 17 are covered from the sides by a pair of left and right centre cowls 37. The rear part of the vehicle body frame F, the rear bank exhaust pipes 33R, the rear bank collecting exhaust pipe 34R, and the rear bank exhaust muffler 35R are covered by a rear cowl 38 in such a manner that a rear part of the rear bank exhaust muffler 35R extends rearwardly therefrom.

Above the engine main body 17 and on a front side of the fuel tank 30 is disposed a single air cleaner 42, common to the front bank BF and the rear bank BR, so as to be partially housed in a valley 43 between the front bank BF and the rear bank BR and to be interposed between the pair of left and right main frames 13, which are a pair of left and right frame members serving as part of the vehicle body frame F. The air cleaner 42, together with the fuel tank 30, is covered by a cover 39.

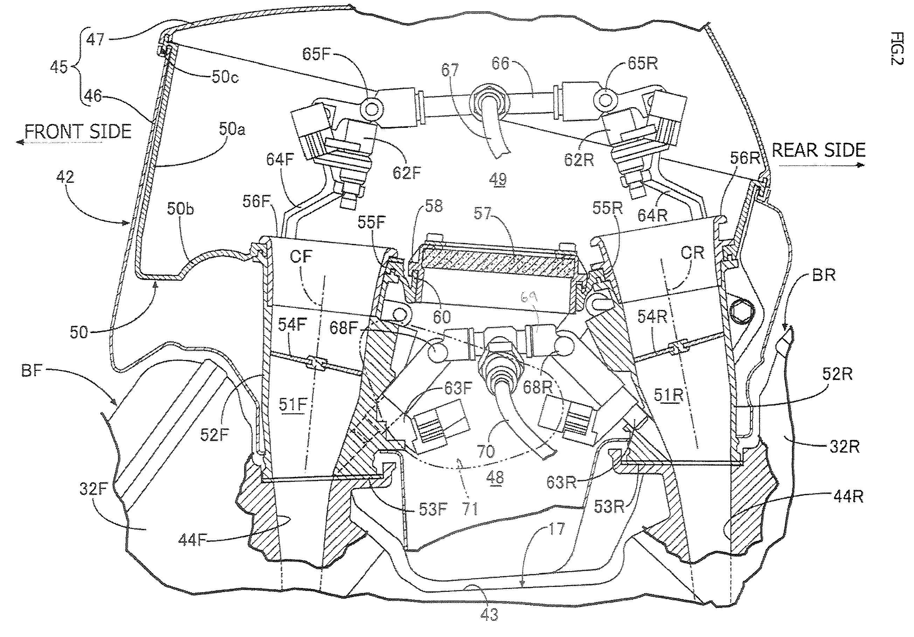

Referring additionally to FIG. 2, vertically extending intake ports 44F and 44R which correspond to the pair of cylinders are provided on the sidewalls, facing the valley 43, of the cylinder heads 32F and 32R in the front and rear banks BF and BR of the engine main body 17.

A cleaner case 45 of the air cleaner 42 is composed of a case main body 46 formed into an upwardly-open box shape, and a case cover 47 joined to an upper end part of the case main body 46 to close the upper opening of the case main body 46. A partition wall 50 that partitions an inside of this cleaner case 45 into an uncleaned air chamber 48 on a lower side and a cleaned air chamber 49 on an upper side is clamped between the case main body 46 and the case cover 47.

The partition wall 50 integrally includes a cylindrical sidewall part 50a close to and facing an inner surface of the upper sidewall in the case main body 46 of the cleaner case 45, a bottom plate part 50b provided continuously with a lower end of this sidewall part 50a, and a clamped part 50c that has a substantially T-shaped cross-sectional shape and protrudes outwardly from an upper end of the sidewall part 50a. The clamped part 50c is clamped between an upper end part of the case main body 46 and a lower end part of the case cover 47.

Front-bank throttle bodies 52F, each forming an intake path 51 F that individually communicates with the intake port 44F for each cylinder in the cylinder head 32F of the front bank BF, penetrate a bottom wall 46a of the case main body 46 and are each connected to the cylinder head 32F with the intermediary of a gasket 53F. Rear-bank throttle bodies 52R, each forming an intake path 51 R that individually communicates with the intake port 44R for each cylinder in the cylinder head 32R of the rear bank BR, penetrate the bottom wall 46a of the case main body 46 and are each connected to the cylinder head 32R with the intermediary of a gasket 53R. That is, the front bank and rear bank throttle bodies 52F and 52R are at least partially housed in the uncleaned air chamber 48 of the air cleaner 42, and in this embodiment, the major part of the front bank and rear bank throttle bodies 52F and 52R is housed therein.

In addition, axial centrelines CF and CR of the intake paths 51 F and 51 R in the front bank and rear bank throttle bodies 52F and 52R, when in the state of being connected to the cylinder heads 32F and 32R, are inclined so as to get closer to each other in the upward direction. In the front bank and rear bank throttle bodies 52F and 52R are pivotally supported throttle valves 54F and 54R to control the degree of opening of the intake paths 51 F and 51 R.

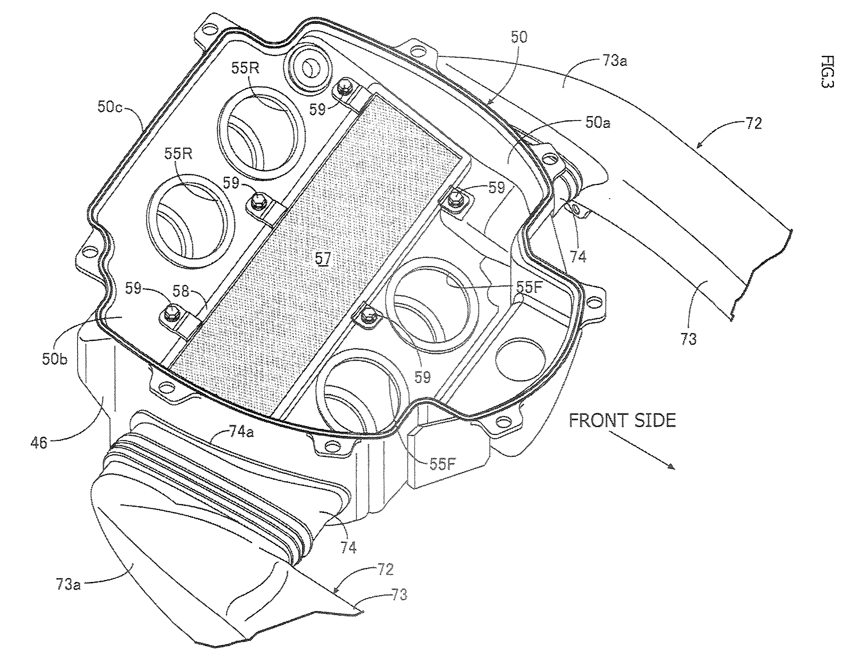

Referring additionally to FIG. 3, a pair of fitting holes 55F corresponding to the pair of front bank throttle bodies 52F and a pair of fitting holes 55R corresponding to the pair of rear bank throttle bodies 52R are formed in the bottom wall part 50b of the partition wall 50. Air funnels 56F and 56R, whose lower end parts are fitted and connected to upper end parts of the front bank and rear bank throttle bodies 52F and 52R, are fitted into these fitting holes 55F and 55R, so that their upper ends open into the cleaned air chamber 49.

In the air cleaner 42, a cleaner element 57 is disposed between the front bank and rear bank throttle bodies 52F and 52R. This cleaner element 57 is formed into a rectangular shape and is held by an element support frame 58. An opening 60 having a rectangular shape that is longer in the lateral direction of the vehicle is formed in the bottom wall part 50b of the partition wall 50 between the pair of fitting holes 55F corresponding to the front bank throttle bodies 52F and the pair of fitting holes 55R corresponding to the rear bank throttle bodies 52R. The element support frame 58, part of which is fitted into the opening 60, is fastened to the bottom wall part 50b of the partition wall 50 by plural bolts 59 in such a manner that the opening 60 is sealed up by the cleaner element 57.

That is, the cleaner element 57 has a rectangular shape and is disposed between the front bank and rear bank throttle bodies 52F and 52R in the air cleaner 42 with its longer direction extending parallel to the axis of the crankshaft 18, in the lateral direction of the vehicle. Air introduced into the uncleaned air chamber 48 passes upward through the cleaner element 57 and is led to the cleaned air chamber 49. Then, the flow direction of the air which has been cleaned by the cleaner element 57 is reversed to a downward direction from the cleaned air chamber 49, so that the air passes through the air funnels 56F and 56R and the intake paths 51 F and 51 R to be introduced into the intake ports 44F and 44R.

In the cleaned air chamber 49 are disposed a front pair of first fuel injection valves 62F and a rear pair of first fuel injection valves 62R that inject fuel toward an inside of the intake paths 51 F and 51 R via the air funnels 56F and 56R, respectively. Downstream of the first fuel injection valves 62F and 62R, in the direction of fuel flow, a front pair of second fuel injection valves 63F and a rear pair of second fuel injection valves 63R that inject fuel toward the intake paths 51 F and 51 R respectively are attached to the front bank and rear bank throttle bodies 52F and 52R, respectively.

The first fuel injection valves 62F on the side of the front bank BF are supported by a valve support frame 64F attached to the bottom wall part 50b of the partition wall 50 so as to straddle the air funnels 56F from above. Similarly, the first fuel injection valves 62R on the side of the rear bank BR are supported by a valve support frame 64R attached to the bottom wall part 50b of the partition wall 50 so as to straddle the air funnels 56R from above. A common fuel feed pipe 66 is connected to a fuel feed pipe 65F that is connected to the first fuel injection valves 62F on the side of the front bank BF and extends in the lateral direction of the vehicle in the cleaned air chamber 49, and is also connected to a fuel feed pipe 65R that is connected to the first fuel injection valves 62R on the side of the rear bank BR and extends in the lateral direction of the vehicle in the cleaned air chamber 49. A fuel hose 67 inserted into the cleaned air chamber 49 of the air cleaner 42 to guide the fuel from the fuel tank 30 is connected to this common fuel feed pipe 66.

Likewise, a common fuel feed pipe 69 is connected to a fuel feed pipe 68F that is connected to the second fuel injection valves 63F on the side of the front bank BF and extends along the lateral direction of the vehicle in the uncleaned air chamber 48, and is also connected to a fuel feed pipe 68R that is connected to the second fuel injection valves 63R on the side of the rear bank BR and extends along the lateral direction of the vehicle in the uncleaned air chamber 48. A fuel hose 70 inserted into the uncleaned air chamber 48 of the air cleaner 42 to guide the fuel from the fuel tank 30 is connected to this common fuel feed pipe 69.

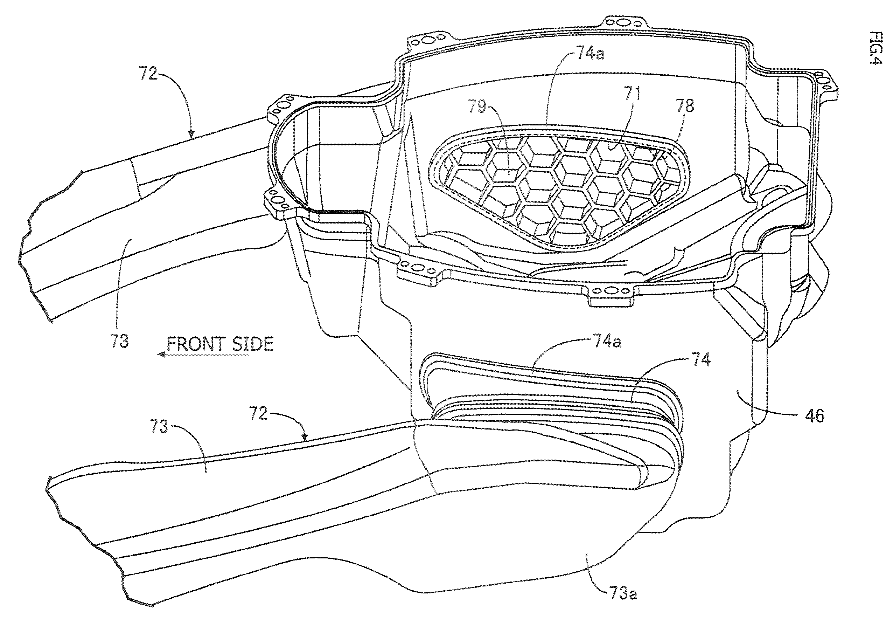

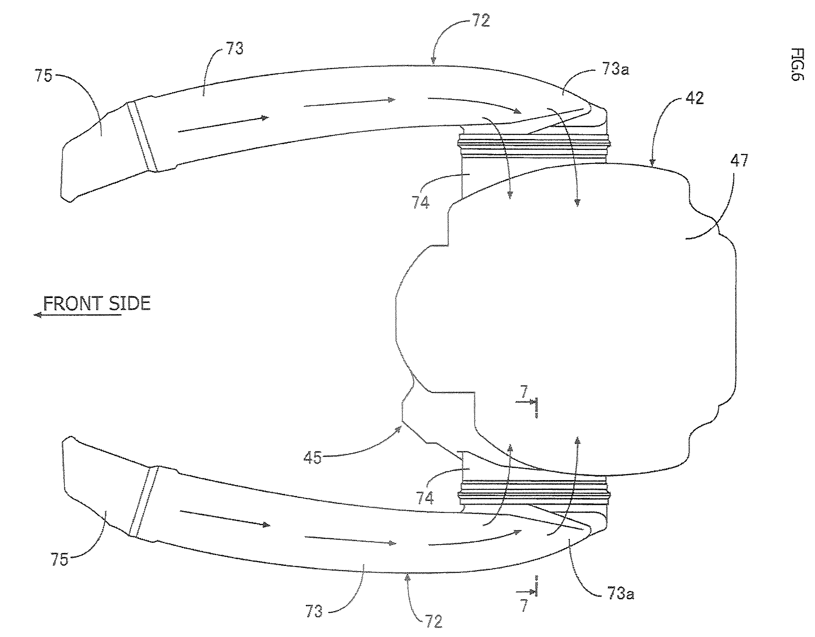

Referring now also to FIGS. 4 to 6, an air inlet 71 is provided at a lateral side part of the air cleaner 42 on at least one side thereof in the lateral direction of the vehicle. In this embodiment, the air inlets 71 are provided at both sides. A pair of left and right air introducing units 72 for introducing air into these air inlets 71 are connected to the air cleaner 42. These air introducing units 72 are formed so as to each have an open front end and to bend the intake direction from the longitudinal direction of the vehicle to the lateral direction of the vehicle, as shown by arrows in FIG. 6.

The air introducing unit 72 includes at least the following components: an intake duct 73 that extends in the longitudinal direction of the vehicle with one end opened toward the front side and which has, at a rear end part, a bending part 73a that bends the intake direction from the longitudinal direction of the vehicle to the lateral direction of the vehicle; and a connecting tube 74 that has the air inlet 71 at a downstream end and serves as part of the air introducing unit 72 downstream of the bending part 73a. The connecting tube 74 is connected to the air cleaner 42 and is made of an elastic material. In this embodiment, the air introducing unit 72 is formed so as to include an entrance duct 75 communicating with a front end part of the intake duct 73, in addition to the intake duct 73 and the connecting tube 74. In addition, a front end part of the entrance duct 75 is connected to an inner surface of the centre cowl 37 so as to communicate with an air intake 76 (see FIG. 1) made in a side surface of a front part of the centre cowl 37.

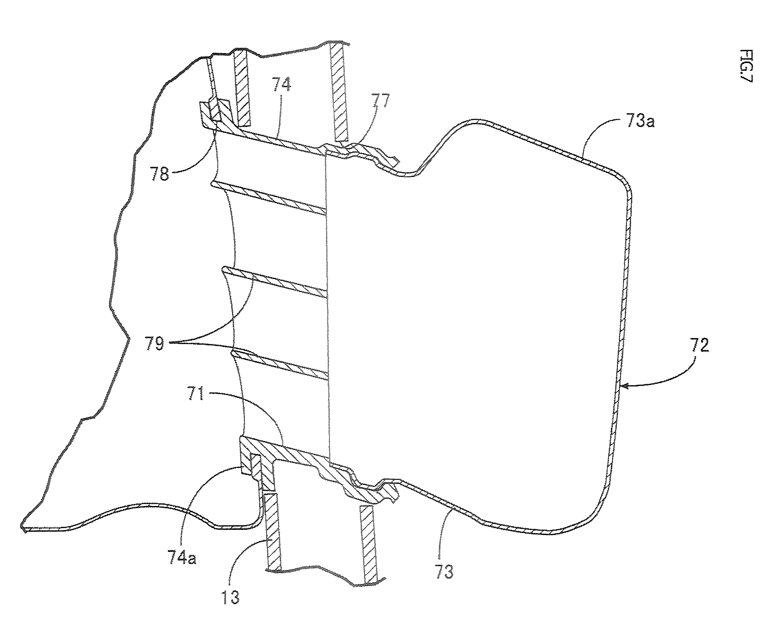

Referring now also to FIG. 7, the intake duct 73 is disposed on an outer lateral side of at least one of the pair of left and right main frames 13. In this embodiment, the intake ducts 73 are disposed on the outer lateral sides of both main frames 13. Part of the connecting tube 74 is housed in a through-hole 77 made in the main frame 13. That is, an upstream end part of the connecting tube 74 that extends in the lateral direction of the vehicle and penetrates the main frame 13 is connected to the bending part 73a at a rear end part of the intake duct 73.

Connection holes 78 are made at both sides of the case main body 46 in the cleaner case 45 of the air cleaner 42. Downstream end parts of the connecting tubes 74 are fitted and connected to these connection holes 78. Specifically, the downstream end parts of the connecting tubes 74 are fitted and connected to the connection holes 78 in such a manner that a peripheral part of the connection hole 78 is fitted to an outer circumference of a connection flange part 74a that is integrally provided at the downstream end part of the connecting tube 74 and flares outwardly.

The downstream end part of the connecting tube 74 forms the air inlet 71 for introducing air into the uncleaned air chamber 48 of the air cleaner 42. In this air inlet 71, plural ribs 79 that partition this air inlet 71 into plural sections are provided. Specifically, the plural ribs 79 are integrally provided at the downstream end part of the connecting tube 74 so as to be disposed in the air inlet 71. In this first embodiment, the ribs 79 are disposed in a honeycomb manner.

Next, the operation of the first embodiment will be described. The air introducing unit 72 for introducing air into the air inlet 71 provided at at least one side of the air cleaner 42 (both sides, in this embodiment) has an open front end and is connected to the air cleaner 42 in such a manner as to change the intake direction from the longitudinal direction of the vehicle to the lateral direction of the vehicle. In this configuration, in the air inlet 71, the plural ribs 79 are provided to partition this air inlet 71 into plural sections. Therefore, although the air introducing unit 72 bends the intake direction from longitudinal to lateral and disturbance of the airflow is generated at the bending part 73a, air is introduced into the air cleaner 42 after its airflow is regulated by the plural ribs 79. This makes it possible to extend part of the air introducing unit 72 in the longitudinal direction of the vehicle to ensure adequate capacity of the air introducing unit 72, and can contribute to enhancement of intake efficiency of the engine E through the airflow regulation for air to be introduced into the air cleaner 42.

Furthermore, the air introducing unit 72 includes at least the intake duct 73, which extends in the longitudinal direction of the vehicle to guide air from the front side and has, at the rear end part, the bending part 73a to change the intake direction from longitudinal to lateral, and the connecting tube 74, which has the air inlet 71, in which the plural ribs 79 are provided, at the downstream end part and serves as part of the air introducing unit 72 downstream of the bending part 73a. The connecting tube 74 is connected to the air cleaner 42 and is made of an elastic material. Therefore, the rigidity of the air inlet 71 can be enhanced by the plural ribs 79, and the downstream end part of the connecting tube 74 can be assembled to the air cleaner 42 while the air inlet 71 is bent. Thus, rigidity and ease of assembly can both be achieved.

Moreover, the intake duct 73 is disposed on the laterally outer side of at least one (both, in this embodiment) of the pair of left and right main frames 13, which serve as part of the vehicle body frame F and are disposed on both sides of the air cleaner 42, and part of the connecting tube 74 is housed in the through-hole 77 made in the main frame 13. Therefore, the connecting tube 74 can be supported by the main frame 13, and the opening area of the connecting tube 74 can be ensured.

In addition, the air inlets 71 are provided at both lateral sides of the air cleaner 42 and the air introducing units 72 are connected to the air cleaner 42 as a pair of left and right units. This can ensure sufficient capacity of the intake into the air cleaner 42, and further enhance the intake efficiency of the engine E.

Furthermore, the plural ribs 79 are disposed in a honeycomb manner. Therefore, the rigidity of the air inlet 71 and a lateral part of the air cleaner 42 around it can be enhanced, and the opening area of the air inlet 71 can be made larger. Thus, higher intake capacity can be ensured and further enhancement in the intake efficiency of the engine E can be achieved.

Furthermore, the air cleaner 42 is disposed above the engine main body 17 formed as a V-type engine, in such a manner that part of the air cleaner 42 is housed in the valley 43 between the front bank BF and the rear bank BR in the engine main body 17. At least part of the front bank and rear bank throttle bodies 52F and 52R connected to the cylinder heads 32F and 32R, respectively, of the front bank BF and the rear bank BR is housed in the air cleaner 42. In addition, the cleaner element 57 is disposed between the front bank and rear bank throttle bodies 52F and 52R. Thus, air introduced from the air inlets 71 at both sides of the air cleaner 42 can be effectively filtered by the cleaner element 57 disposed along the intake flow directions at substantially the centre of the air cleaner 42 between the front and rear throttle bodies 52F and 52R.

Moreover, the longer axis of the rectangular cleaner element 57 is parallel to the axis of the crankshaft 18, which is rotatably borne by the engine main body 17 and extends in the lateral direction of the vehicle. Therefore, the cleaner element 57, which is formed into a rectangular shape to increase the filtering area, can be set along the intake flow directions and air can be filtered more effectively.

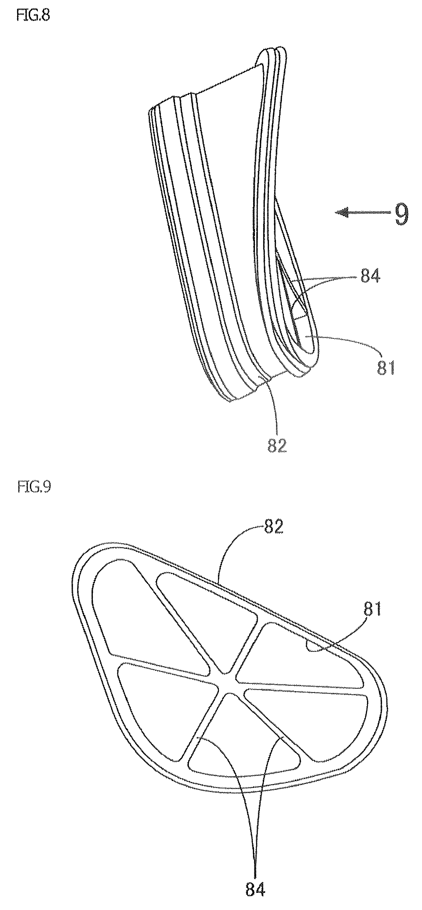

An alternative form of connecting tube 82 as shown in FIGS. 8 and 9 may be used instead of the connecting tube 74 of the first embodiment (but it should be noted that this alternative does not fall within the scope of the invention). A downstream end part of this connecting tube 82 forms an air inlet 81 for introducing air into the air cleaner 42 (as in the first embodiment). In this air inlet 81, plural ribs 84 that partition this air inlet 81 into plural sections are provided. Specifically, the plural ribs 84 are integrally provided at the downstream end part of the connecting tube 82 in such a manner as to be disposed in the air inlet 81. In this alternative arrangement, the ribs 84 are arranged so as to radially extend from a substantially central part of the air inlet 81.

Although a preferred embodiment of the present invention has been described above, the present invention is not limited to the above-described embodiment, and various design changes can be made without departing from the present invention set forth in the scope of claims.

## Claims

1. A saddle-type vehicle having an intake system, the intake system comprising:
an air cleaner (42) that is disposed above an engine main body (17) mounted on a vehicle body frame (F) and is connected to cylinder heads (32F, 32R) of the engine main body (17); and
an air introducing unit (72) for introducing air into an air inlet (71, 81) provided at at least one side of the air cleaner (42) in the lateral direction of the vehicle, the air introducing unit (72) having an open front end and being connected to the air cleaner (42) in such a manner as to change an air intake direction from the longitudinal direction of the vehicle to the lateral direction of the vehicle, the intake system being **characterized in that**
a plurality of ribs (79, 84) that partition the air inlet (71, 81) into a plurality of sections are provided in the air inlet (71, 81), the plurality of ribs (79) being disposed in a honeycomb manner.

2. A saddle-type vehicle having an intake system according to claim 1, **characterized in that**
the air introducing unit (72) includes at least an intake duct (73) that extends in the longitudinal direction of the vehicle to guide air from a front side and has, at a rear end part, a bending part (73a) that changes the intake direction from the longitudinal direction of the vehicle to the lateral direction of the vehicle, and a connecting tube (74, 82) that has the air inlet (71, 81) in which the plurality of ribs (79, 84) are provided at a downstream end part and serves as part of the air introducing unit (72) downstream of the bending part (73a), and the connecting tube (74, 82) is connected to the air cleaner (42) and is made of an elastic material.

3. A saddle-type vehicle having an intake system according to claim 2, **characterized in that**
the intake duct (73) is disposed on a laterally outer side of at least one of a pair of left and right frame members (13) that serve as part of the vehicle body frame (F) and that are disposed on both sides of the air cleaner (42), and part of the connecting tube (74, 82) is housed in a through-hole (77) made in the at least one of the frame members (13).

4. A saddle-type vehicle having an intake system according to any one of claims 1 to 3, **characterized in that**
the air inlets (71, 81) are provided at both lateral sides of the air cleaner (42), and the air introducing units (72) are connected to the air cleaner (42) as a pair of left and right units.

5. A saddle-type vehicle having an intake system according to any one of claims 1 to 4, **characterized in that**
the air cleaner (42) is disposed above the engine main body (17) formed as a V-type engine in such a manner that part of the air cleaner (42) is housed in a valley (43) formed between a front bank (BF) and a rear bank (BR) included in the engine main body (17), and front bank and rear bank throttle bodies (52F, 52R) connected to the cylinder heads (32F, 32R) of the front bank (BF) and the rear bank (BR) are at least partially housed in the air cleaner (42), and
a cleaner element (57) is disposed between the front bank and rear bank throttle bodies (52F, 52R).

6. A saddle-type vehicle having an intake system according to claim 5, **characterized in that**
the cleaner element (57) has a rectangular shape with its longer axis parallel to an axis of a crankshaft (18) that is rotatably borne by the engine main body (17) and extends in the lateral direction of the vehicle.

## Patentansprüche

1. Sattelfahrzeug mit einem Ansaugsystem, das Ansaugsystem umfassend :
einen Luftreiniger (42), der über einem Motorhauptkörper (17), welcher an einer Fahrzeugkarosserie (F) angebracht ist, angeordnet ist und mit Zylinderköpfen (32F, 32R) des Motorhauptkörpers (17) verbunden ist; und
eine Lufteinführeinheit (72) zum Einführen von Luft in einen Lufteinlass (71, 81), der auf zumindest einer Seite des Luftreinigers (42) in der Seitenrichtung des Fahrzeugs vorgesehen ist, wobei die Lufteinführeinheit (72) ein offenes Vorderende aufweist und derart mit dem Luftreiniger (42) verbunden ist, dass eine Luftansaugrichtung aus der Längsrichtung des Fahrzeugs zur Seitenrichtung des Fahrzeugs geändert wird, wobei das Ansaugsystem **dadurch gekennzeichnet ist, dass**
mehrere Rippen (79, 84), die den Lufteinlass (71, 81) in mehrere Sektionen abteilen, im Lufteinlass (71, 81) vorgesehen sind, wobei die mehreren Rippen (79) wabenartig angeordnet sind.

2. Sattelfahrzeug mit einem Ansaugsystem nach Anspruch 1, **dadurch gekennzeichnet, dass**
die Lufteinführeinheit (72) zumindest eine Luftleitung (73), die in der Längsrichtung des Fahrzeugs zum Führen von Luft von einer Vorderseite verläuft und an einem Rückendenteil ein Krümmungsteil (73a) aufweist, welches die Ansaugrichtung von der Längsrichtung des Fahrzeugs zur Seitenrichtung des Fahrzeugs ändert, und ein Verbindungsrohr (74, 82) enthält, das den Lufteinlass (71, 81), in dem die mehreren Rippen (79, 84) an einem stromabwärtigen Endteil vorgesehen sind, aufweist und als Teil der Lufteinführeinheit (72) stromabwärts vom Krümmungsteil (73a) dient, und wobei das Verbindungsrohr (74, 82) mit dem Luftreiniger (42) verbunden ist und aus elastischen Material hergestellt ist.

3. Sattelfahrzeug mit einem Ansaugsystem nach Anspruch 2, **dadurch gekennzeichnet, dass**
die Ansaugleitung (73) auf einer lateral äußeren Seite von zumindest einem von einem Paar von linken und rechten Rahmengliedern (13) angeordnet ist, die als Teil der Fahrzeugkarosserie (F) dienen und auf beiden Seiten des Luftreinigers (42) angeordnet sind, und wobei ein Teil des Verbindungsrohrs (74, 82) in einem Durchgangsloch (77) aufgenommen ist, das in dem zumindest einen der Rahmenglieder (13) hergestellt ist.

4. Sattelfahrzeug mit einem Ansaugsystem nach einem der Ansprüche 1 bis 3, **dadurch gekennzeichnet, dass**
die Lufteinlässe (71, 81) auf beiden lateralen Seiten des Luftreinigers (42) vorgesehen sind und die Lufteinführeinheiten (72) mit dem Luftreiniger (42) als Paar linker und rechter Einheiten verbunden sind.

5. Sattelfahrzeug mit einem Ansaugsystem nach einem der Ansprüche 1 bis 4, **dadurch gekennzeichnet, dass**
der Luftreiniger (42) derart über dem Motorhauptkörper (17), der als V-Motor ausgebildet ist, angeordnet ist, dass ein Teil des Luftreinigers (42) in einem Tal (43) aufgenommen ist, das zwischen einer Frontbank (BF) und einer Rückbank (BR), die im Motorhauptkörper (17) enthalten sind, ausgebildet ist, und Frontbank- und Rückbankdrosselkörper (52F, 52R), die mit den Zylinderköpfen (32F, 32R) der Frontbank (BF) und der Rückbank (BR) verbunden sind, zumindest teilweise im Luftreiniger (42) aufgenommen sind, und
ein Reinigungselement (57) zwischen dem Frontbank- und Rückbankdrosselkörpers (52F, 52R) angeordnet ist.

6. Sattelfahrzeug mit einem Ansaugsystem nach Anspruch 5, **dadurch gekennzeichnet, dass**
das Reinigungselement (57) eine Rechteckform aufweist, wobei seine längere Achse parallel zu einer Achse einer Kurbelwelle (18) verläuft, die drehbar durch den Motorhauptkörper (17) gelagert ist und in der Seitenrichtung des Fahrzeugs verläuft.

## Revendications

1. Véhicule de type à selle ayant un système d'admission, le système d'admission comprenant :
un purificateur d'air (42) qui est disposé au-dessus d'un corps principal de moteur (17) monté sur un châssis de carrosserie de véhicule (F) et qui est relié à des culasses (32F, 32R) du corps principal de moteur (17) ; et
une unité d'introduction d'air (72) pour introduire de l'air dans une admission d'air (71, 81) disposée au niveau d'au moins un côté du purificateur d'air (42) dans la direction latérale du véhicule, l'unité d'introduction d'air (72) ayant une extrémité avant ouverte et étant reliée au purificateur d'air (42) de façon à changer une direction de prise d'air de la direction longitudinale du véhicule à la direction latérale du véhicule, le système d'admission étant **caractérisé en ce que**
une pluralité de nervures (79, 84) qui cloisonnent l'admission d'air (71, 81) en une pluralité de sections sont prévues dans l'admission d'air (71, 81), la pluralité de nervures (79) étant disposée d'une façon en nid d'abeilles.

2. Véhicule de type à selle ayant un système d'admission selon la revendication 1, **caractérisé en ce que**
l'unité d'introduction d'air (72) inclut au moins un conduit d'admission (73) qui s'étend dans la direction longitudinale du véhicule pour guider l'air provenant d'un côté avant et qui a, au niveau d'une partie d'extrémité arrière, une partie à courbure (73a) qui change la direction d'admission de la direction longitudinale du véhicule à la direction latérale du véhicule, et un tube de connexion (74, 82) qui a l'admission d'air (71, 81) dans laquelle la pluralité de nervures (79, 84) est prévue au niveau d'une partie d'extrémité aval et sert de partie de l'unité d'introduction d'air (72) en aval de la partie à courbure (73a), et le tube de connexion (74, 82) est relié au purificateur d'air (42) et est fait d'une matière élastique.

3. Véhicule de type à selle ayant un système d'admission selon la revendication 2, **caractérisé en ce que**
le conduit d'admission (73) est disposé sur un côté latéralement extérieur d'au moins un d'un couple d'éléments de châssis de gauche et de droite (13) qui servent de partie du châssis de carrosserie de véhicule (F) et qui sont disposés des deux côtés du purificateur d'air (42), et une partie du tube de connexion (74, 82) est logée dans un trou traversant (77) réalisé dans l'au moins un des éléments de châssis (13).

4. Véhicule de type à selle ayant un système d'admission selon l'une quelconque des revendications 1 à 3, **caractérisé en ce que**
les admissions d'air (71, 81) sont prévues au niveau des deux côtés latéraux du purificateur d'air (42), et les unités d'introduction d'air (72) sont reliées au purificateur d'air (42) en tant que couple d'unités de gauche et de droite.

5. Véhicule de type à selle ayant un système d'admission selon l'une quelconque des revendications 1 à 4, **caractérisé en ce que**
le purificateur d'air (42) est disposé au-dessus du corps principal de moteur (17) formé comme un moteur de type en V de telle sorte qu'une partie du purificateur d'air (42) est logée dans un creux (43) formé entre un banc avant (BF) et un banc arrière (BR) inclus dans le corps principal de moteur (17), et les corps de papillon de banc avant et de banc arrière (52F, 52R) reliés aux culasses (32F, 32R) du banc avant (BF) et du banc arrière (BR) sont au moins partiellement logés dans le purificateur d'air (42), et
un élément nettoyeur (57) est disposé entre les corps de papillon de banc avant et de banc arrière (52F, 52R).

6. Véhicule de type à selle ayant un système d'admission selon la revendication 5, **caractérisé en ce que**
l'élément nettoyeur (57) a une forme rectangulaire avec son axe plus long parallèle à un axe d'un vilebrequin (18) qui est porté en rotation par le corps principal de moteur (17) et s'étend dans la direction latérale du véhicule.
